# EUROPÄISCHE PATENTANMELDUNG

(11) **EP 4 122 809 A1**
(43) Veröffentlichungstag der Anmeldung: **25.01.2023**
(21) Anmeldenummer: 22184057.2
(22) Anmeldetag: 11.07.2022
(51) Int. Cl.: B63B 1/34, B63B 1/36, B64C 21/02, F03D 1/06

(54) **BESCHICHTETER, EINER RELATIVEN FLUIDBEWEGUNG AUSGESETZTER GEGENSTAND**

(30) Priorität: 22.07.2021 DE 102021118967
(71) Anmelder: Fraunhofer-Gesellschaft zur Förderung der angewandten Forschung eingetragener Verein, 80686 München (DE)
(72) Erfinder: Speckmann, Björn, 28359 Bremen (DE); Föste, Volker, 28359 Bremen (DE)
(74) Vertreter: Eisenführ Speiser

(57) **Zusammenfassung**

Einer relativen Fluidbewegung ausgesetzter Gegenstand, mit einer wenigstes einer Teil der der Fluidbewegung ausgesetzten Oberfläche bedeckenden perforierten Beschichtung, wobei die Perforationen der Beschichtung so ausgestaltet sind, dass auf der fluidabgewandten Seite eine luftführender Raum vorhanden ist, so dass die Luft durch die Perforationen zur fluidzugewandten Seite durchtreten kann, dadurch gekennzeichnet, dass das Material der Beschichtung eine Biegefestigkeit von ≥ 45 MPa und eine Schlagzähigkeit von ≥ 5 kJ/m² besitzt.

## Beschreibung

Die Erfindung betrifft einen einer relativen Fluidbewegung ausgesetzten Gegenstand mit einer perforierten Beschichtung, wobei die Perforationen der Beschichtung so ausgestaltet sind, dass auf der fluidabgewandten Seite ein luftführender Raum vorhanden ist, sodass die Luft durch die Perforationen zur fluidzugewandten Seite durchtreten kann. Die Erfindung betrifft ferner die Verwendung einer perforierten Beschichtung zur Verringerung des Reibwiderstandes eines einer relativen Fluidbewegung ausgesetzten Gegenstandes sowie ein Verfahren zur Herstellung eines beschichteten, einer relativen Fluidbewegung ausgesetzten Gegenstandes.

Es gibt eine Vielzahl von Gegenständen, bei denen es wünschenswert ist, dass der Reibungswiderstand gegenüber dem sie umgebenden Medium verringert wird. Zu nennen sind hier als Beispiele jegliche Formen von Verkehrsmitteln, aber auch statische Gegenstände, wie zum Beispiel Windenergieanlagen oder Pipelines haben den Bedarf, dass die Reibung an Teilen ihrer Oberfläche möglichst geringgehalten wird.

Besonders hohe Bedeutung hat eine entsprechende Reibungsreduktion bei Gegenständen, die mit flüssigen Fluiden in Kontakt sind. Ganz besonders gilt dies für Schiffe.

Der Energieverbrauch von Schiffen, hängt neben der Effizienz der Antriebseinheit und dem Luftwiderstand, besonders vom Widerstand des Schiffrumpfes in Fahrt durchs Wasser ab. Der Strömungswiderstand bei Schiffen wird im wesentlich von dem Form-; Wellen-; Seegangs-; Ablösewiderstand, als auch von der Reibung zwischen dem Fluid und der festen Oberfläche der Schiffswand bestimmt. Abgesehen von der Reibung sind die anderen Widerstände konstruktive Widerstände, die hauptsächlich mit der gewählten Rumpfform und dem Strömungsregime korrelieren. Der Reibungswiderstand gehört nicht dazu und kann unter bestimmten Strömungszuständen bis zu 70% des Gesamtwiderstands betragen.

Seit langem wird versucht die Reibung an den Wänden von Schiffen zu reduzieren. Regattasegler schliffen ihre Bootsrümpfe mit der Strömungsrichtung an, um den Effekt des Haifisches zu imitieren. Dieser besitzt kleine Mikrostrukturen auf seinen Schuppen (Riblets), welche die Reibung reduzieren können. Diese Technik konnte sich bisher nicht im Markt durchsetzen. Bekanntermaßen kann Fischschleim, z.B. vom Barrakuda oder Thunfisch, durch das Dämpfen von Mirko-Wirbeln die Reibung mindern. Es ist aber derzeit kein System bekannt in dem diese Technik kommerziell verwendet wird. Seit einigen Jahren werden viskoelastische Materialien, wie Silikone und Mehrschichtsysteme, eingesetzt um den Umschlagpunkt von laminarer und turbulenter Strömung zu beeinflussen. Entsprechende Beschichtungen, die diesen Effekt nutzen sollen, sind auf dem Markt erhältlich Kleine Luftblasen unter einem Schiffsboden dienen zur Luftschmierung und damit zur Verminderung der Reibung zwischen dem Schiffsboden und dem umgebenden Wasser. Damit wird der direkte Kontakt zwischen Schiffsaußenhaut und Wasser durch die Luft reduziert, was als Austausch der Reibpartner verstanden werden kann. Dass Mikroblasen eine reibungswiderstandsverringernde Wirkung haben, wenn sie in eine turbulente Grenzschicht eingebracht werden, ist schon seit Jahren bekannt, nur der physikalische Mechanismus, der dazu führt, ist noch nicht ganz verstanden. Versuche mit Zusätzen von kleinen Partikeln (Polymeren) in die turbulente Grenzschicht zeigten, dass die Polymermoleküle die Turbulenzstruktur veränderten, indem sie die kleinen Wirbel dämpften. Dieses Phänomen trat hauptsächlich in der Übergangszone von der laminaren Unterschicht zu der Überlappungsschicht (rein turbulente Schicht), auf. Mikroblasen interagieren auch mit den Wirbeln in der Übergangszone und erhöhen die dynamische Viskosität, was zu einer weiteren Erhöhung der laminaren Unterschicht führt. Des Weiteren wird angenommen, dass die Größe und die Verteilung der Mikroblasen wichtige Aspekte in der Widerstandsverringerung darstellen. Genaue Untersuchungen, die dieses belegen, gibt es aber zurzeit noch nicht (Hassan, Ortiz).

"Mitsubishi Air Lubrication System" und Silverstream, sind die bekanntesten Methoden/Verfahren die derzeit Verwendung finden. Durch Taschen und Düsen, eingelassen in den Schiffsboden, wird Luft mittels Kompressoren und einem Rohrleitungssystem unter dem Schiff ausgeblasen. Die so generierten Mikroblasen können den Energieverbrauch um 5-10% reduzieren (Angaben Silverstream).

Vor dem Hintergrund des beschriebenen Standes der Technik war es Aufgabe der vorliegenden Erfindung, eine Lösung anzugeben, mittels derer der Reibwiderstand von Gegenständen, die einer relativen Reibbewegung durch ein Fluid ausgesetzt sind, effektiv verringert wird. Vorzugsweise war es dabei gewünscht, dass diese Reduktion auch mit einem möglichst geringen Energieaufwand erfolgen kann.

Diese Aufgabe wird erfindungsgemäß gelöst durch einen einer relativen Fluidbewegung ausgesetzten (körperlichen) Gegenstand (also insbesondere ein Bauteil oder ein anderes dreidimensional ausgeformtes Gebilde) , mit einer wenigstens einen Teil der der Fluidbewegung ausgesetzten Oberfläche bedeckenden perforierten Beschichtung, wobei die Perforationen der Beschichtung so ausgestaltet sind, dass auf der fluidabgewandten Seite eine luftführender Raum vorhanden ist, so dass die Luft durch die Perforationen zur fluidzugewandten Seite durchtreten kann, dadurch gekennzeichnet, dass das Material der Beschichtung eine Biegefestigkeit von ≥ 45 MPa und eine Schlagzähigkeit von ≥ 5 kJ/m² besitzt.

Ein Fluid im Sinne der vorliegenden Erfindung ist entweder ein Gas oder ein flüssiger Stoff, wobei in Sinne des vorliegenden Textes Flüssigkeiten bevorzugt sind, ganz besonders bevorzugt ist Wasser.

"Einer relativen Fluidbewegung ausgesetzt" bedeutet dabei im Sinne dieser Erfindung, dass entweder das Fluid sich gegenüber dem erfindungsgemäßen Gegenstand bewegt, wie zum Beispiel der Wind gegenüber einer entsprechend ausgestatteten Windenergieanlage oder die Flüssigkeit innerhalb einer Pipeline oder aber, dass der Gegenstand sich gegenüber den jeweiligem Fluid bewegt, wie zum Beispiel ein Schiff im Wasser, wobei selbstverständlich auch mitumfasst ist, dass sich sowohl der Gegenstand als auch das Fluid bewegen, wie zum Beispiel ein Schiff in strömendem Wasser.

Ein "luftführender Raum" im Sinne der vorliegenden Erfindung bedeutet bevorzugt, dass zwischen der eigentlichen Oberfläche des beschichteten Gegenstandes und der der Fluidbewegung ausgesetzten Oberfläche eine Ebene parallel zu der der Fluidbewegung ausgesetzten Oberfläche vorhanden ist, die zu ≤ 60 %, bevorzugt 50%, weiter bevorzugt ≤ 35% noch weiter bevorzugt ≤ 20%, und besonders bevorzugt ≤ 10% von Material gefüllt ist, das einen Luftstrom nicht zulässt. Dabei ist die zu betrachtende Fläche durch die Fläche gekennzeichnet, die die außenliegenden einzelnen Perforationen begrenzen. Im Zweifelsfall werden die Außenlinienperforationen mit der jeweils kürzesten Strecke zur benachbart liegenden, ebenfalls außenliegenden Perforation verbunden, um so den Umfang der zu betrachtenden Fläche festzulegen. Mit anderen Worten, ist es erfindungsgemäß bevorzugt, dass unterhalb der perforierten Beschichtung nicht nur einzelne Leitungen, sondern tatsächlich ein größerer Raum gegeben ist, in dem sich die Luft, die durch die Perforationen zu der dem Fluid ausgesetzten Oberfläche treten soll. Dabei ist selbstverständlich zu beachten, dass im Sinne der vorliegenden Erfindung bevorzugt die Luft, die durch die Perforationen hindurchtreten soll, nicht zum Fluid im Sinne der vorliegenden Erfindung gezählt wird. Bevorzugt ist mit dem Begriff "Luft" tatsächlich typische Atmosphärenluft gemeint, es ist aber auch möglich, dass andere Gase die Funktion der "Luft" im Sinne der vorliegenden Erfindung einnehmen. Im unten beschriebenen Sonderfall kann auch - anders als gerade definiert - das Fluid die Funktion der Luft einnehmen.

Grundsätzlich ist zu beachten, dass der "luftführende Raum" im Sinne dieser Erfindung nicht zwingend Atmosphärenluft führen muss, sondern selbstverständlich auch jedes geeignete andere Gas, wie zum Beispiel Abgase, hiermit umfasst sind.

Im Rahmen dieses Textes bedeutet, "sodass die Luft durch die Perforation zur Fluid zugewandten Seite durchtreten kann", dass grundsätzlich die Möglichkeit eines entsprechenden Luftdurchrittes besteht. Mitumfasst von dieser Definition ist allerdings auch die grundsätzliche Variante, dass auch ein Gas von der fluidzugewandten Seite (das selbstverständlich nicht unbedingt Luft sein muss) durch die perforierte Beschichtung zur fluidabgewandten Seite hindurchtreten kann. Dies ist z.B. dann gegeben, wenn es sich bei dem Fluid um ein Gas handelt und im luftführenden Raum ein Unterdruck erzeugt wird, wenn so an der Grenzfläche der fluidzugewandten Seite des erfindungsgemäßen Gegenstandes durch Absaugung von dort vorhandenem Fluid z.B. eine entsprechende Reibungsreduktion erzeugt werden soll. In diesem Zusammenhang ist - anders in der Definition zu "luftführender Raum" beschrieben, ausnahmsweise das (gasförmige) Fluid dasjenige, dass durch die Perforationen hindurchtritt.

Die Biegefestigkeit im Sinne der vorliegenden Erfindung wird im Zweifel mittels der DIN EN ISO 178 für Polymere und für faserverstärkte Kunststoffe gemäß der DIN EN ISO 14125 bestimmt.

Die Schlagfestigkeit im Sinne der vorliegenden Erfindung wird im Zweifelsfall durch die DIN EN ISO 179 bestimmt.

Bevorzugt im Sinne der vorliegenden Erfindung ist eine Biegefestigkeit für das Material der Beschichtung von ≥ 60 MPa und/oder eine Schlagzähigkeit von ≥ 10 kJ/m².

Es hat sich überraschenderweise herausgestellt, dass die Kombination der genannten Materialeigenschaften mit dem darunterliegenden luftführenden Raum zu besonders guten Reibreduktionen führt und den Anforderungen einer praktischen Prüfung hinsichtlich der mechanischen Ansprüchen (innerer Druck, Einflüsse der hohen Anströmung durch Wasser) stand hielt.

Bevorzugt ist im Rahmen der Erfindung ein einer relativen Fluidbewegung ausgesetzter Gegenstand, wobei das Material der Beschichtung eine Zugfestigkeit von ≥ 20 MPa, bevorzugt ≥ 35 MPa besitzt.

Die Zugfestigkeit im Sinne der vorliegenden Erfindung wird im Zweifelsfall nach der DIN EN ISO 527-1 bestimmt.

Alternativ oder zusätzlich bevorzugt ist ein erfindungsgemäßer einer relativen Fluidbewegung ausgesetzter Gegenstand, wobei das Material der Beschichtung eine Druckfestigkeit von ≥ 40 MPa, bevorzugt ≥ 55 MPa und besonders bevorzugt ≥ 70 MPa besitzt.

Es hat sich nämlich herausgestellt, dass auch die genannten bevorzugten Materialeigenschaften erheblich zur Wirkungsweise der erfindungsgemäß vorzusehenden Beschichtung beitragen können.

Im Ergebnis stellt die Erfindung durch Auswahl von Materialeigenschaften und die Anordnung des Materials, das heißt der Beschichtung in Kombination mit dem luftführenden Raum eine für eine Reibungsreduktion durch "Luftschmierung" besonders geeignete Kombination bereit. Es ist also ein Effekt der Erfindung, dass durch die erfindungsgemäße Kombination Luftblasen besonders effektiv durch die Beschichtung durchtreten können und gleichzeitig möglichst lange an der Grenzschicht zwischen der äußeren Oberfläche der Beschichtung und dem umgebenden Fluid verbleiben, um so effektiv zur Reibungsreduktion beizutragen.

Bevorzugt ist ein erfindungsgemäßer, einer relativen Fluidbewegung ausgesetzter Gegenstand, wobei das Material der Beschichtung ein Polymer ist, ausgewählt aus der Gruppe bestehend aus Epoxide, Polyurethane, Polyester, Polycarbonate und (Meth-)Acrylate, wobei die Beschichtung auch faserverstärkt sein kann. Auch metallische Werkstoffe können eingesetzt werden.

Diese Materialien haben sich als besonders geeignet für die Beschichtung herausgestellt.

Literaturangaben besagen, dass Blasen mit einer Größe von 0,4-2,2 mm Durchmesser innerhalb der Grenzschicht eine gute Wirkung in Bezug auf Reibungsminderung zeigen. Die Blasengröße ist sowohl von der umgebenden Stromgeschwindigkeit des Fluids, als auch vom zugeführten Gas- und Umgebungsdruck oder deren Differenz abhängig sein. Die Definition der Perforation sollte der Zielgröße der Gasblasen entsprechen. Kato und Kodama (Microbubbles as a Skin Friction Reduction Device, 2003) definieren die Blasengröße zwischen 0,4 und 2,2 mm. Andere Blasengrößen können möglicherweise unter anderen Umgebungsbedingungen auch einen positiven Einfluss besitzen.

Mit diesen bevorzugten Perforationsausgestaltungen lässt sich der erfindungsgemäß gewünschte Reibungsverminderungseffekt besonders gut erzielen.

Dadurch, dass erfindungsgemäß ein "luftführender Raum" vorgesehen ist, bevorzugt wie weiter oben beschrieben, ist es besonders gut möglich, die Anforderungen der zu beschichtenden Oberfläche des Gegenstandes zu erfüllen: So kann am Computer eine optimale Versorgungstruktur und Deckschicht für jeden individuellen Gegenstand entwickelt werden. Dabei können Parameter, wie benötigtes Fördervolumen, maximaler Druck und spezifische Besonderheiten des Objektes (Geometrie, Sperrbereiche, Bereiche unterschiedlicher Umgebungsdrücke oder Ähnliches), aber auch Perforationsdurchmesser, Verteilung und Menge der Perforationen frei verteilt werden. Dabei lässt sich insbesondere mit den bevorzugten Materialien die gewünschte Geometrie in geeigneten Präge- oder Gussverfahren erzeugen.

Bevorzugt im Sinne der Erfindung ist es, dass die erfindungsgemäß vorzusehende Beschichtung von der Oberfläche des eigentlichen Gegenstandes dadurch beabstandet vorgesehen wird, dass der luftführende Raum durch (tragende) Abstandshalter beispielsweise in Säulenform definiert wird. Dabei ist es selbstverständlich notwendig, den luftführenden Raum lateral zu verschließen.

Es kann dabei erfindungsgemäß bevorzugt sein, dass der luftführende Raum in einzelne Sektoren unterteilt ist, die entweder vollständig gegeneinander abgeschlossen sind, oder über einen verminderten Gasaustausch untereinander verfügen. Hierdurch ist es möglich, auf spezielle Anforderungen an der der relativen Fluidbewegung ausgesetzten Oberfläche einzugehen.

Zusätzlich kann es erfindungsgemäß bevorzugt sein, dass weitere reibungsvermindernde Maßnahmen im Rahmen der Herstellung der erfindungsgemäß einzusetzenden Beschichtung vorgesehen werden, wie beispielsweise Mikrostrukturierungen.

Dies ist insbesondere im Rahmen der bevorzugt einzusetzenden polymeren Materialien besonders gut in einem Präge- oder Gussverfahren möglich.

Bevorzugt ist ein erfindungsgemäßer, einer relativen Fluidbewegung ausgesetzter Gegenstand, wobei die Beschichtung topographisch so ausgestaltet ist, dass an der fluidzugewandten Seite der Perforationen der Blasenabriss verlangsamt wird, bevorzugt so, dass an der fluidzugewandten Seite der Perforationen stets Luft vorhanden ist.

Eine solche topografische Ausgestaltung könnte zum Beispiel darin bestehen, dass bei einzelnen oder bevorzugt bei allen Perforationen eine Vertiefung im Bereich des Perforationsaustrittes auf der dem Fluid ausgesetzten Oberfläche der Beschichtung vorgesehen wird. Durch diese Vertiefung wird die jeweilige Luftblase, die ja die Reibungsverminderung bewirken soll, länger an der Oberfläche gehalten, bevor sie abgerissen wird und somit ihre reibungsvermindernde Wirkung nicht mehr erfüllen kann.

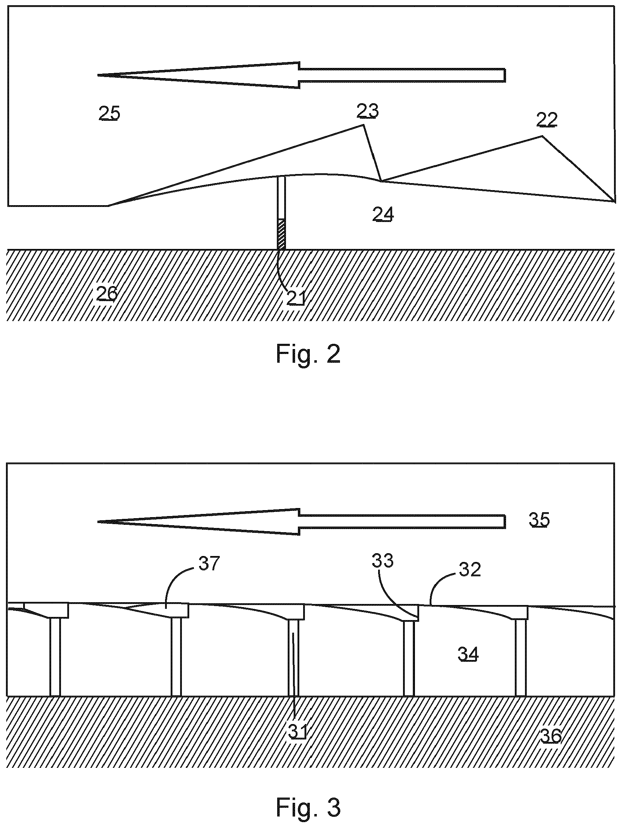

Ein Beispiel für eine solche Ausgestaltung stellt die Fig. 3 dar. Diese ist ein Querschnitt durch eine Schicht, die eine stabile Lufttasche erzeugt. Die Bedeutung der Bezugszeichen sind
31 Bohrung/Düse (Perforation)
32 Element zum Erzeugen eines dahinterliegenden Totwasserbereiches
33 Muldenartige Vertiefung im Totwasserbereich
34 Polymer für die Schicht (Beschichtung)
35 Fluid z.B. Wasser
36 Gas(-gemisch) z.B. Luft
37 Bereich einer möglichen Lufttasche

### Der Pfeil gibt die Stromrichtung an

Dabei tritt die Luft 36 durch die Perforation 31 in der Beschichtung 34 so durch, dass wenigstens ein Teil der Luft aufgrund der Ausgestaltung des Austrittsbereiches in der Perforation in Form eines Elementes zum Erzeugen eines dahinterliegenden Totwasserbereiches 32 in der muldenartigen Vertiefung im Totwasserbereich 33 verlängert verbleibt. Diese muldenartige Vertiefung bildet den Bereich einer möglichen Lufttasche 37.

Der in der Fig. 3 eingezeichnete Pfeil gibt dabei die Strömungsrichtung des Fluids an, das häufig Wasser ist.

Selbstverständlich sind andere topografische Ausgestaltungen denkbar, hierbei kommt es stets darauf an, eine oberflächliche Ausgestaltung zu schaffen, bei der die austretende Gasblase (zum Beispiel Luft) verlängert an der fluidzugewandten Oberfläche gehalten wird.

Erfindungsgemäß bevorzugt ist ein erfindungsgemäßer, einer relativen Fluidbewegung ausgesetzter Gegenstand, wobei die fluidzugewandte Seite der Beschichtung so ausgestaltet ist, dass unter Einfluss einer relativen Fluidbewegung ein Unterdruck im Bereich wenigstens eines Teiles der Perforationen entsteht.

Diese bevorzugte erfindungsgemäße Ausgestaltung kann zum Beispiel dadurch erzeugt werden, dass eine profilartige Struktur im Sinne eines auftriebzugewandten flächigen Profils, bei dem zu der Oberseite (Saugseite) ein Unterdruck (bei Ausströmung) entsteht, auf die dem Fluid ausgesetzte Seite der Beschichtung aufgebracht wird.

Dadurch kann es ermöglicht werden, im Bereich der Perforationen auf der Austrittsseite einen Unterdruck so zu erzeugen, dass die auszutretende Luft ohne druckerzeugende Maßnahmen (wie zum Beispiel ein Überdruck im Bereich des luftführenden Raumes) zum Durchtritt durch die Perforationen gebracht wird. Somit lässt sich die Versorgung der Perforationen mit durchzutretender Luft zum Beispiels mittels Kompressoren oder grundsätzlich eingesetzter Druckluft einsparen, was aus energetischen Gesichtspunkten wünschenswert ist.

Bevorzugt ist ein erfindungsgemäßer, einer relativen Fluidbewegung ausgesetzter Gegenstand, wobei der luftführende Raum einen Bereich darstellt, der durch Stützelemente bedingt wird, die zwischen der perforierten Beschichtung und der Gegenstands-oberfläche oder zwischen der perforierten Beschichtung und einer weiteren zum Gegenstand hin angeordneten Beschichtung angeordnet sind, wobei die Stützelemente die Fläche der fluidabgewandten Seite der Deckschicht nur zu ≤ 65%, bevorzugt ≤ 50%, weiter bevorzugt ≤ 25% und besonders bevorzugt ≤ 10% bedecken.

Diese Geometrie lässt die erfindungsgemäßen Effekte besonders leicht erreichen.

Des Weiteren kann es erfindungsgemäß bevorzugt sein, die erfindungsgemäß einzusetzende Beschichtung auf der der relativen Fluidbewegung ausgesetzten Seite mit zusätzlichen Bioziden bzw. Antifouling-Maßnahmen auszustatten. Geeignete Maßnahmen können hierzu sein, die Oberfläche so auszugestalten, dass aus topografischen Gründen Organismen und insbesondere Mikroorganismen weniger leicht anhaften können, selbstverständlich ist es auch möglich, und in einigen Fällen erfindungsgemäß bevorzugt, die erfindungsgemäß einzusetzende Beschichtung mit chemischen Bioziden auszugestalten.

Dadurch wird die Wahrscheinlichkeit von Anlagerung von Mikroorganismen verringert, die sich per se bereits störend im Sinne eines möglichst geringen Reibwiderstandes durch Oberflächenunebenheiten, die sie erzeugen, auswirken. Hinzu kommt aber noch, dass durch eine entsprechende Ausgestaltung der Oberfläche der erfindungsgemäß vorzusehenden Beschichtung auch verhindert werden kann, dass sich die Perforationen durch Mikroorganismen (oder auch größere Organismen, wie zum Beispiels Seepocken) zusetzen.

Teil der Erfindung ist auch die Verwendung einer, wie oben beschriebenen, perforierten Beschichtung, zur Verbesserung des Reibwiderstandes eines einer relativen Fluidbewegung ausgesetzten Gegenstandes, wobei die perforierte Beschichtung über einem luftführenden Raum, wie er weiter oben definiert ist, angeordnet ist.

Teil der Erfindung ist auch ein Verfahren zur Herstellung eines erfindungsgemäßen beschichteten einer relativen Fluidbewegung ausgesetzten Gegenstandes umfassend die Schritte:
a) Bereitstellen des Gegenstandes,
b) Bereitstellen von Material für eine perforierte Beschichtung und
c) Beschichten des Gegenstandes mit dem in Schritt b) bereitgestellten Material, so dass ein erfindungsgemäßer Gegenstand entsteht.

Für den Schritt c) stehen dem Fachmann eine Vielzahl von Möglichkeiten zur Verfügung, die er jeweils zweckmäßig auswählen wird. Eine besonders günstige Möglichkeit sind klassische formgebende Verfahren, wie zum Beispiel Pressen, Fräsen, 3D-Druck, Extrusion und Laserbearbeitung.

Es ist auch möglich, das in Schritt b) bereitgestellte Material vorab in geeigneter dreidimensionaler Ausgestaltung auf eine Folie aufzubringen und diese dann auf den Gegenstand mit dem entsprechenden Aufbau zu befestigen.

Bevorzugt ist ein erfindungsgemäßes Verfahren, wobei vor Schritt c) als Schritt b2) Stützelemente und/oder Seitenelemente für die Bildung des luftführenden Raumes auf dem Gegenstand angebracht werden.

Auf diese Art ist es besonders gut möglich, geeignete luftführende Räume für die Erfindung zu erzeugen.

Erfindungsgemäß bevorzugt ist es, dass das erfindungsgemäße Verfahren in Schritt b) und/oder in Schritt c) ein Verkleben umfasst. Alternative Varianten zur Verbindung der einzelnen Teile, die letztendlich den luftführenden Raum bilden, stehen dem Fachmann selbstverständlich ebenfalls zur Verfügung. So kann es erfindungsgemäß unter bestimmten Umständen bevorzugt sein, dass die Teile durch Fügen verbunden werden.

Bevorzugt ist eine erfindungsgemäßes Verfahren, wobei vor Schritt c) die Deckschicht als perforierter Festkörper hergestellt wird.

Damit ist es besonders gut möglich, die Deckschicht in den geeigneten Maßen herzustellen. Diese muss natürlich nachfolgend noch mit dem zu beschichtenden Gegenstand so verbunden werden, dass der erfindungsgemäß vorzusehende luftführende Raum entsteht. Insgesamt bietet die vorliegende Erfindung nicht nur den Vorteil, dass durch den Einsatz einer effektiven Luftschmierung die Reibung des erfindungsgemäßen Gegenstandes gegenüber dem sich relativ bewegenden Fluid effektiv verringert wird, sondern es gibt eine Reihe weiterer Vorteile:
- grundsätzlich ist es möglich, Gegenstände mit der erfindungsgemäß vorzusehenden Beschichtung zu versehen ohne dass weitere Umbauten notwendig sind.
- Zudem ist es möglich, durch eine geeignete Ausgestaltung des luftführenden Raums und/oder durch Erzeugung eines Unterdrucks an geeigneter Stelle die Luftschmierung ohne das Einbringen von zusätzlichen Versorgungsleitungen und gegebenenfalls sogar ohne weitere wesentliche energieverbrauchende Maßnahmen zu erzeugen.
- Die erfindungsgemäße Ausgestaltung kann sich auch auf nur Teilflächen des erfindungsgemäßen Gegenstandes beziehen, es kann aber auch eine komplexe Geometrie dieses Gegenstandes entsprechend ausgestattet werden.
- Durch eine geeignete Ausgestaltung im Rahmen der Erfindung ist es zudem möglich, dass die reibungsverminderte Luft längere Zeit an der gewünschten Grenzfläche zwischen Gegenstandsoberfläche und Fluid gehalten wird.
- Es ist möglich, die perforierte Beschichtung nebst Unterbau so auszugestalten, dass sie vorbereitet auf eine Folie aufgebracht hergestellt wird, sodass dies im Werk vorgefertigt und vor Ort auf das Objekt aufgetragen werden kann. Dies kann zum Beispiel durch Klebstoff, mechanische Verbindung oder andere Verbindungswege erfolgen. Zusätzlich ist es möglich, ein Dual Cure System einzusetzen, also ein solches, welches einen ersten Härtungsschritt während der Herstellung und einen zweiten Härtungsschritt nach dem Aufbringen auf den Gegenstand vorsieht.
- Durch Segmentierung des Gesamtbereiches, der mit der perforierten Beschichtung versehen ist, ist es möglich, während Ruhezeiten, wie zum Beispiel im Hafen oder auf Reede, nur die Kielsegmente mit Druckluft zu versorgen, die wasserberührt sind. Dies würde einen Wuchs durch Meeresorganismen verhindern und verringert die Notwendigkeit, chemische Anti-Fouling-Maßnahmen zu ergreifen.Nachfolgend wird die Erfindung anhand einer schematischen Figur und eines Beispiels näher erörtert:

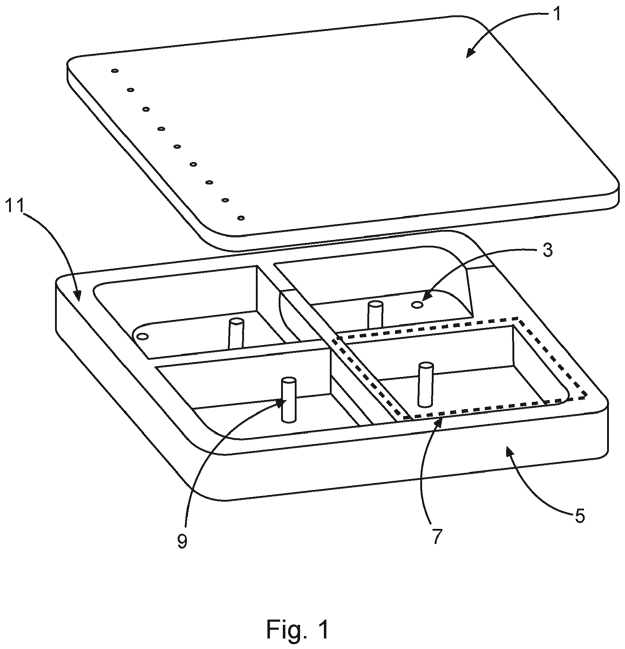

   Die Fig. 1 stellt den schematischen Aufbau der erfindungsgemäß vorzusehenden Beschichtung und den luftführenden Raum dar.

### Dabei bedeuten die Bezugszeichen

- 1: perforierte Beschichtung
- 3: luftführender Raum
- 5: Außenrand des luftführenden Raumes (Unterbau)
- 7: Segment
- 9: Stützelement
- 11: Rahmen

Der in der Fig. 1 abgebildete Aufbau wird mit dem zu beschichtenden Gegenstand so verbunden, dass der erfindungsgemäße Gegenstand entsteht. Dabei kann es bevorzugt sein, dass zunächst der Unterbau 5 auf den zu beschichtenden Gegenstand aufgebracht wird. Dies kann sinnvollerweise gleichzeitig mit den Abstandshaltern 9 erfolgen, wobei - sofern gewünscht - auch Stege eingebracht werden können, die die Segmente 7 voneinander abgrenzen. Auf den dadurch entstehenden Rahmen 11 kann dann die Deckschicht 1 aufgebracht werden, wobei die Deckschicht perforiert ist. Mit dem Aufbringen der Deckschicht 1 entsteht der luftführende Raum 3, durch den die Luftversorgung für die Perforationen in der Deckschicht erfolgen kann.

### Beispiele:

### Beispiel 1

Nach Vermessen der zu beschichtenden Oberfläche des zu beschichtenden Gegenstandes wurde eine transparente Silikonform als Negativ des beabsichtigten luftführenden Raumes erzeugt.

Dabei wurde die geplante Randstruktur (Unterbau) und die geplanten Abstandshalter ausgespart. Vorliegend betrug der Durchmesser der Abstandshalter 4 mm, mit einer Höhe von 3 mm. Die Wandstärke der äußeren Umrandung betrug 15 mm, die Höhe ebenfalls 3 mm, die Absperrungsstege von Kammer zu Kammer betrugen hinsichtlich der Breite 5 mm und hinsichtlich der Höhe ebenfalls 3 mm. Hierzu passend wurde ein Prägewerkzeug für die Deckschicht erzeugt, die den Dimensionen des Unterbaus entspricht. Hierbei wurden ebenfalls in Form einer Negativmatrize Pinstrukturen für die späteren Perforationen vorgesehen. Vorliegend wurden 4.500 Pins pro Quadratmeter für den Unterbau vorgesehen und 8.888 Bohrungen pro Quadratmeter mit einem Durchmesser von 0,25 mm für den Bereich der glatten Schicht. Für den Bereich von strukturierten Schichten wurden 80.000 Bohrungen à 0,5 mm Durchmesser pro Quadratmeter vorgesehen.

Mittels dieser Formen wurde sowohl der Unterbau als auch die Beschichtung nach folgendem Vorgehen erstellt:
In eine Aluminiumplatte, plangefräst und foliert EN AW-5083 wurden die jeweilig notwendigen Strukturen mittels einer Portalfräse TYP: BZT-PFE1512-PX gefräst. Dazu wurde mittels der 3D CAD Konstruktions-Software Inventor, ein digitales Bauteil erstellt. Dieses Bauteil wurde als step.-Datei in die CAM-Software SprutCAM überführt um die notwendigen Programmierungen der nachfolgenden Fräsarbeiten zu tätigen.

Nach dem Fertigstellen der Urmuster wurde ein Prägewerkzeugt erstellt:
Das Prägewerkzeug wird aus einem additionsvernetzenden Silikonpolymere Typs Köraform A 42, Mischungsverhältnis Komponente A : Komponente B = 10:1 nach Gewicht, (CHT R. Beitlich GmbH, Geretsried, bezogen über POLYchem Handelsges.m.b.H, Gewerbeweg 7, A-7411 Markt Allhau) erzeugt. Diese Silikonpolymere vernetzen Platin-katalysiert bei Raumtemperatur.

Es werden 2.0 kg der Komponente A und 0,2 kg der Komponente B des Köraform A42 (Mischungsverhältnis 10:1 n.Gew.) in einem geeigneten Behälter vorgelegt und durch Rühren mittels Vakuum-Dissolver für 10 Minuten homogen gemischt.

Die Entlüftung der Silikonmischung wird durch Verwendung eines Vakuum-Dissolvers sichergestellt

Nachdem die vollständige Freiheit der Mischung von Lufteinschlüssen gewährleistet ist, wird das fließfähige Material in die horizontal wie vertikal exakt ausgerichtete Form mit definierter Tiefe gegossen. Mittels Rakel und seitlich angebrachter Höhenanschläge in der Urform kann das Material abgezogen werden, so dass eine definierte Schichtdicke entsteht. Sollten sich im Rahmen des Eingießvorgangs Lufteinschlüsse im Material bilden, so muss die Silikonmischung mit einem Luftstrahl von ca. 500°C kurzzeitig bedüst werden. Nachfolgend wird 12 Stunden bei Raumtemperatur (RT) ausgehärtet.

Mittels der Prägewerkzeuge wurde zunächst der Unterbau auf ein Aluminium Substrat aufgebracht. Hierzu wurde das Silikon-Prägewerkzeug horizontal wie vertikal exakt ausgerichtete.

In der Folge wurde ein 2K Epoxid-Material vom Typ Epoxid L, ein Bisphenol A/F-Harz (nachfolgend Komponente A genannt) mit dem Härter EPH 161 (nachfolgend Komponete B genannt) (R&G Faserverbundwerkstoffe GmbH, Postfach 1145, D-71107 Waldenbuch), Mischungsverhältnis Komponente A : Komponente B = 100:25 nach Gewicht, nach Herstellerangaben im 500 ml PE-Becher mittels Rührholz vermischt. Dieser Mischung wurde einen 6,5% (gew) BYK410 (BYK-Chemie GmbH, Abelstraße 45, 46483 Wesel) zugegeben und mittels Rührholz homogen eingerührt. Somit wurde nach 10 Minuten Ruhephase ohne weiteres Verrühren eine geeignete pastöse Viskosität des Materials erreicht, welches das Einarbeiten in die Stützstrukturen erleichterte. Hierzu wurde die Mischung auf das Prägewerkzeug überführt und mittels Spachtel in die Vertiefungen der Form gestrichen. Nach Beendigung dieses Vorganges wurde das zu beschichtende Aluminiumsubstrat in einer Stärke von 3 mm auf die Prägeform gelegt und mit einem 2 Kg Gewicht beschwert. Nach 12 h Reaktionszeit bei RT konnte der Aufbau gedreht werden und das Silikonprägewerkzeug von der einen Seite zur anderen vom Substrat abgezogen werden.

Mittels des zweiten Prägewerkzeuges wurde Deckschicht auf den zuvor erstellten Unterbau aufgebracht. Hierzu wurde das Silikon-Prägewerkzeug horizontal wie vertikal exakt ausgerichtete. In der Folge wurde ein 2K Epoxid-Material vom Typ Epoxid L (nachfolgend Komponente A genannt) mit dem Härter EPH 161 (nachfolgend Komponete B genannt) (R&G Faser-verbundwerkstoffe GmbH, Postfach 1145, D-71107 Waldenbuch), Mischungsverhältnis Komponente A : Komponente B = 100:25 nach Gewicht, nach Herstellerangaben im 500 ml PE-Becher mittels Rührholz vermischt. Diese Mischung wurde in das Prägewerkzeug mit definierter Tiefe gegossen. Mittels eines Rakel und seitlich angebrachter Höhenanschläge in der Prägeform, kann das Material abgezogen werden, so dass eine definierte Schichtstärke entsteht. Das so vorbereitete Prägewerkzeug wir mit dem zuvor gefertigten Substrat in der Weise abgedeckt, dass die Stütz-Struktur auf dem Substrat in den noch nicht vernetzten Film im Prägewerkzeug eingetaucht wird. Anschließend wird das Substrat mit einem 2 Kg Gewicht mittig fixiert. Nach 12h Reaktionszeit bei RT kann der Aufbau zurück gebaut werden und das Prägewerkzeug von einer Seite zu anderen Seite abgezogen werden.

Technische Daten Epoxid L+ Härter EPH 161 = 100:25 nach Gewicht nach 7 Tagen bei RT:
Biegefestigkeit 112 MPa
Zugfestigkeit 70 MPa
Druckfestigkeit 123 MPa
Schlagzähigkeit 16,5 kJ/m2
(Herstellerangaben R&G Faserverbundwerkstoffe GmbH, Postfach 1145, D-71107 Waldenbuch)

### Beispiel 2: Faserverstärktes Material

In eine Aluminiumplatte, plangefräst und foliert EN AW-5083 wurden die jeweilig notwendigen Strukturen mittels einer Portalfräse TYP: BZT-PFE1512-PX gefräst. Dazu wurde mittels der 3D CAD Konstruktions-Software Inventor, ein digitales Bauteil erstellt. Dieses Bauteil wurde als stp.-Datei in die CAM-Software SprutCAM überführt um die notwendigen Programmierungen der nachfolgenden Fräsarbeiten zu tätigen. Hierbei ist darauf zu achten das die Bohrungen für die späteren Düsen möglichst tief sind um im negativen Prägewerkzeug möglichst lange Platzhalter herzustellen. In diesem Fall betrug die Tiefe der Bohrungen 2mm.

Nach dem Fertigstellen der Urmuster wurde ein Prägewerkzeugt erstellt:
Das Prägewerkzeug wird aus einem additionsvernetzenden Silikonpolymere Typs Köraform A 42, Mischungsverhältnis Komponente A : Komponente B = 10:1 nach Gewicht, (CHT R. Beitlich GmbH, Geretsried, bezogen über POLYchem Handelsges.m.b.H, Gewerbeweg 7, A-7411 Markt Allhau) erzeugt. Diese Silikonpolymere vernetzen Platin-katalysiert bei Raumtemperatur.

Es werden 2.0 kg der Komponente A und 0,2 kg der Komponente B des Köraform A42 (Mischungsverhältnis 10:1 n.Gew.) in einem geeigneten Behälter vorgelegt und durch Rühren mittels Vakuum-Dissolver für 10 Minuten homogen gemischt.

Die Entlüftung der Silikonmischung wird durch Verwendung eines Vakuum-Dissolvers sichergestellt

Nachdem die vollständige Freiheit der Mischung von Lufteinschlüssen gewährleistet ist, wird das fließfähige Material in die horizontal wie vertikal exakt ausgerichtete Form mit definierter Tiefe gegossen. Mittels eines Rakel und seitlich angebrachter Höhenanschläge in der Urform kann das Material abgezogen werden, so dass eine definierte Schichtdicke entsteht. Sollten sich im Rahmen des Eingießvorgangs Lufteinschlüsse im Material bilden, so muss die Silikonmischung mit einem Luftstrahl von ca. 500°C kurzzeitig bedüst werden. Nachfolgend wird 12 Stunden bei Raumtemperatur (RT) ausgehärtet.

Mittels der Prägewerkzeuge wurde zunächst der Unterbau auf ein Aluminium Substrat aufgebracht. Hierzu wurde das Silikon-Prägewerkzeug horizontal wie vertikal exakt ausgerichtete.

In der Folge wurde ein 2K Epoxid-Material vom Typ Epoxid L, ein Bisphenol A/F-Harz (nachfolgend Komponente A genannt) mit dem Härter EPH 161 (nachfolgend Komponete B genannt) (R&G Faserverbundwerkstoffe GmbH, Postfach 1145, D-71107 Waldenbuch), Mischungsverhältnis Komponente A : Komponente B = 100:25 nach Gewicht, nach Herstellerangaben im 500 ml PE-Becher mittels Rührholz vermischt. Dieser Mischung wurde einen 6,5% (gew) BYK410 (BYK-Chemie GmbH, Abelstraße 45, 46483 Wesel) zugegeben und mittels Rührholz homogen eingerührt. Somit wurde nach 10 Minuten Ruhephase ohne weiteres Verrühren eine geeignete pastöse Viskosität des Materials erreicht, welches das Einarbeiten in die Stützstrukturen erleichterte. Hierzu wurde die Mischung auf das Prägewerkzeug überführt und mittels Spachtel in die Vertiefungen der Form gestrichen. Nach Beendigung dieses Vorganges wurde das zu beschichtende Aluminiumsubstrat in einer Stärke von 3 mm auf die Prägeform gelegt und mit einem 2 Kg Gewicht beschwert. Nach 12 h Reaktionszeit bei RT konnte der Aufbau gedreht werden und das Silikonprägewerkzeug von der einen Seite zur anderen vom Substrat abgezogen werden.

Mittels des zweiten Prägewerkzeuges wurde Deckschicht auf den zuvor erstellten Unterbau aufgebracht. Hierzu wurde das Silikon-Prägewerkzeug horizontal wie vertikal exakt ausgerichtete. In der Folge wurde ein 2K Epoxid-Material vom EP-Gelcoat farblos (nachfolgend Komponente A genannt) mit dem Härter EPH 161 (nachfolgend Komponete B genannt) (R&G Faserverbundwerkstoffe GmbH, Postfach 1145, D-71107 Waldenbuch), Mischungsverhältnis Komponente A : Komponente B = 100:24 nach Gewicht, nach Herstellerangaben im 500 ml PE-Becher mittels Rührholz vermischt. Diese Mischung wurde in das Prägewerkzeug mittels Schaumstoffpinsel beschichtet bis eine Homogene Schicht entstand.

Nach 12 h bei RT Reaktionszeit wurde das so vorbereitete Werkzeug mit wurde ein 2K Epoxid-Material vom Typ Epoxid L (nachfolgend Komponente A genannt) mit dem Härter EPH 161 (nachfolgend Komponete B genannt) (R&G Faserverbundwerkstoffe GmbH, Postfach 1145, D-71107 Waldenbuch), Mischungsverhältnis Komponente A : Komponente B = 100:25 nach Gewicht, nach Herstellerangaben im 500 ml PE-Becher mittels Rührholz vermischt. Gleichfalls wurde das Werkzeug mittels Schaumstoffpinsel benetzt und mit 2 Lagen Glasgewebe 280 g/m² (R&G Faserverbundwerkstoffe GmbH, Postfach 1145, D-71107 Waldenbuch) belegt. Falls nötig muss zusätzliches 2K Epoxid-Material vom Typ Epoxid L in der entsprechenden Mischung mit dem Härter EPH aufgetragen werden. Es ist darauf zu achten, dass die Platzhalter für die Luftdüsen des Prägewerkzeuges durch das Gelege stechen so das ein späterer ungehinderter Durchfluss möglich ist.

Nach 12 h Reaktionszeit bei RT werden die mit Epoxidharz verklebten Spitzen mittels Scharfkantigen Spachtel abgebrochen, so das nach dem Entformen des Prägewerkzeuges sichergestellt ist das der Durchgang offen ist. Nötigenfalls kann das Ergebnis mit Schleifpapier oder einem elektrischen Schleifwerkzeug verbessert werden. Dabei müssen auf Überstände der Fügeflächen entsprechend bearbeitet werden.

Nachdem beide Formteile mit Isopropanol gereinigt wurden, werden die pinartigen Stützstrukturen des ersten Formteils mit einem 2K Epoxid-Material vom Typ Epoxid L, ein (nachfolgend Komponente A genannt) mit dem Härter EPH 161 (nachfolgend Komponente B genannt) (R&G Faserverbundwerkstoffe GmbH, Postfach 1145, D-71107 Waldenbuch), Mischungsverhältnis Komponente A : Komponente B = 100:25 nach Gewicht, nach Herstellerangaben im 500 ml PE-Becher mittels Rührholz vermischt. Dieser Mischung wurde einen 6,5% (gew) BYK410 (BYK-Chemie GmbH, Abelstraße 45, 46483 Wesel) zugegeben und mittels Rührholz homogen eingerührt. Somit wurde nach 10 Minuten Ruhephase ohne weiteres Verrühren eine geeignete pastöse Viskosität des Materials erreicht, um diese Masse mittels Schaumstoffpinsel auf die relevanten Fügestellen aufzutragen. Nach Abschluss dieses Vorganges wird das Formteil 1 auf das Formteil 2 entsprechend seiner Funktion aufgelegt und mit einem 2 Kg Gewicht beschwert.

Nach 12h Reaktionszeit bei RT Kann das Bauteil entformt werden.

### Beispiel 3: Erzeugen einer selbstversorgenden Schicht:

Es wurde eine Beschichtung gemäß Beispiel 1 erzeugt, wobei in Fahrtrichtung des zu beschichtenden Gegenstandes jeweils vor einer Reihe von Perforationen eine topografische Modifizierung angebracht wurde, die bei Vorwärtsbewegung des erfindungsgemäßen beschichteten Gegenstandes (hier ein Wasserfahrzeug) einen Unterdruck im Bereich der Perforationen erzeugt. Hierzu wurde ein halbes NACA 0012 Profil 23 mit einer Profilsehe von 24,85 mm verwendet welches formschlüssig in die Grundplatte eingebettet ist. Das Profil wurde um 5° zur Strömungsrichtung angestellt. Vorgestellt war eine 38,7 mm lange Anlauframpe mit einer Steigung 2,43 mm über die Anlauflänge. Verwendet wurden 0,5 mm Düsenbohrungen 21 mit einem Abstand von 30 mm.

Schematisch wird dieser Aufbau in der Fig. 2 dargestellt, die den Querschnitt der selbstansaugenden Schicht darstellt. Dabei bedeuten die Bezugszeichen
21 Bohrung/Düse (Perforation)
22 Element Anlaufzone
23 NACA 0012 Profil
24 Polymer für die Schicht (Beschichtung)
25 Fluid z.B. Wasser
26 Gas(-gemisch) z.B. Luft

### Der Pfeil gibt die Stromrichtung an

Der Spoiler wurde bereits in der Form (Negativ) für die Beschichtung eingearbeitet.

Es stellte sich heraus, dass bei einer Geschwindigkeit von 4,5 m/s bei der Ausgestaltung gemäß Beispiel 3 genügend Unterdruck erzeugt werden konnte, dass die Perforationen 21 in der Beschichtung ohne weiteren Energieaufwand mit Luft versorgt werden konnten. Hierzu war es selbstverständlich notwendig, am oberen Bereich des luftführenden Raumes eine Öffnung vorzusehen, durch die weitere Luft in den luftführenden Raum eindringen konnte. Selbstverständlich war dafür zu sorgen, dass diese Zutrittsmöglichkeit nicht wasserberührt ist.

### Beispiel 4: Reibungsverminderung

In praktischen Versuchen ließ sich zeigen, dass sowohl die Beschichtung aus den Beispielen 1 zu einer nachweisbaren Reibungsverminderung führten.

Beispiel 2 diente auch zum Nachweis, dass das Polymer zusätzlich mit Fasern verstärkt werden kann. Eine Untersuchung hinsichtlich einer reibungsmindernen Funktion wurde nicht durchgeführt. Beispiel 3 bewies die Funktion einer selbstansaugenden Schicht. Dabei musste zum Erzeugen von Gasblasen keine Druckluft, chemische- oder mechanische Verfahren verwendet werden, um Blasen an der Austrittsseite der Düse zu erzeugen.

## Patentansprüche

1. Einer relativen Fluidbewegung ausgesetzter Gegenstand, mit einer wenigstens einen Teil der der Fluidbewegung ausgesetzten Oberfläche bedeckenden perforierten Beschichtung (1), wobei die Perforationen der Beschichtung (1) so ausgestaltet sind, dass auf der fluidabgewandten Seite eine luftführender Raum (3) vorhanden ist, so dass die Luft durch die Perforationen zur fluidzugewandten Seite durchtreten kann, **dadurch gekennzeichnet, dass** das Material der Beschichtung eine Biegefestigkeit von ≥ 45 MPa und eine Schlagzähigkeit von ≥ 5 kJ/m² besitzt.

2. Einer relativen Fluidbewegung ausgesetzter Gegenstand nach Anspruch 1, wobei das Material der Beschichtung eine Zugfestigkeit von ≥ 20 MPa besitzt.

3. Einer relativen Fluidbewegung ausgesetzter Gegenstand nach Anspruch 1 oder 2, wobei das Material der Beschichtung eine Druckfestigkeit von ≥ 40 MPa besitzt.

4. Einer relativen Fluidbewegung ausgesetzter Gegenstand nach einem der vorangehenden Ansprüche, wobei das Material der Beschichtung ein Polymer ist, ausgewählt aus der Gruppe bestehend aus Epoxide, Polyurethane, Polyester, Polycarbonate und (Meth-)Acrylate, wobei die Beschichtung auch faserverstärkt sein kann.

5. Einer relativen Fluidbewegung ausgesetzter Gegenstand nach einem der vorangehenden Ansprüche, wobei die Beschichtung topographisch so ausgestaltet ist, dass an der fluidzugewandten Seite der Perforationen der Blasenabriss verlangsamt wird, bevorzugt so, dass an der fluidzugewandten Seite der Perforationen stets Luft vorhanden ist.

6. Einer relativen Fluidbewegung ausgesetzter Gegenstand nach einem der vorangehenden Ansprüche, wobei die fluidzugewandte Seite der Beschichtung so ausgestaltet ist, dass unter Einfluss einer relativen Fluidbewegung ein Unterdruck im Bereich wenigstens eines Teiles der Perforationen entsteht.

7. Einer relativen Fluidbewegung ausgesetzter Gegenstand nach einem der vorangehenden Ansprüche, wobei der luftführende Raum (3) einen Bereich darstellt, der durch Stützelemente (9) bedingt wird, die zwischen der perforierten Beschichtung (1) und der Gegenstandsoberfläche oder zwischen der perforierten Beschichtung (1) und einer weiteren zum Gegenstand hin angeordneten Beschichtung angeordnet sind, wobei die Stützelemente die Fläche der fluidabgewandten Seite der Deckschicht nur zu ≤ 65%, bevorzugt ≤ 50%, weiter bevorzugt ≤ 25% und besonders bevorzugt ≤ 10% bedecken.

8. Verwendung einer perforierten Beschichtung (1) wie in einem der Ansprüche 1 bis 6 definiert zur Verringerung des Reibwiderstandes eines einer relativen Fluidbewegung ausgesetzten Gegenstandes, und wobei die perforierte Beschichtung über einem luftführenden Raum, wie in einem der Ansprüche 1 bis 7 definiert,angeordnet ist.

9. Verfahren zur Herstellung eines beschichteten einer relativen Fluidbewegung ausgesetzten Gegenstandes, umfassend die Schritte:
a) Bereitstellen des Gegenstandes,
b) Bereitstellen von Material für eine perforierte Beschichtung und
c) Beschichten des Gegenstandes mit dem in Schritt b) bereitgestellten Material, so dass ein Gegenstand nach einem der Ansprüche 1 bis 7 entsteht.

10. Verfahren nach Anspruch 9, wobei vor Schritt c) als Schritt b2) Stützelemente und/oder Seitenelemente für die Bildung des luftführenden Raumes auf dem Gegenstand angebracht werden.

11. Verfahren nach Anspruch 9 oder 10, wobei Schritt b2) und/oder Schritt c) ein Verkleben umfassen.

12. Verfahren nach einem der Ansprüche 9 bis 11, wobei vor Schritt c) die Deckschicht als perforierter Festkörper hergestellt wird.
